# EUROPÄISCHE PATENTSCHRIFT

(11) **EP 0 587 057 B1**
(45) Veröffentlichungstag und Bekanntmachung des Hinweises auf die Patenterteilung: **14.02.1996**
(21) Anmeldenummer: 93114116.2
(22) Anmeldetag: 03.09.1993
(51) Int. Cl.: A01K 39/02, A01K 39/024

(54) **Wasservorratsbehälter für eine Tiertränke**
Water reservoir for waterer for animals
Réservoir d'eau pour abreuvoir pour animaux

(30) Priorität: 10.09.1992 DE 9212208 U
(43) Veröffentlichungstag der Anmeldung: 16.03.1994
(73) Patentinhaber: LUBING MASCHINENFABRIK LUDWIG BENING GmbH & Co. KG, D-49406 Barnstorf (DE)
(72) Erfinder: Schumacher, Egon, D-49406 Barnstorf (DE)
(74) Vertreter: Möller, Friedrich, Dipl.-Ing.

(56) Entgegenhaltungen:
- DE-U- 9 212 207
- GB-A- 847 607
- GB-A- 867 812
- US-A- 1 477 411
- US-A- 1 633 150
- US-A- 1 903 767
- US-A- 2 524 699
- US-A- 3 384 109
- US-A- 3 537 430
- US-A- 4 794 881

## Beschreibung

Die Erfindung betrifft einen Wasservorratsbehälter für eine Tiertränke nach dem Oberbegriff des Anspruchs 1 und ein Verfahren zum Spülen einer Tiertränke nach dem Oberbegriff des Anspruchs 13.

Tiertränken, und zwar insbesondere Strangtränken, werden über einen Wasservorratsbehälter mit Wasser versorgt. Der Wasservorratsbehälter dient dazu, den Wasserdruck einer Wasserversorgungsleitung auf einen definierten niedrigeren Druck (Tränkedruck) zu verringern. Zum Spülen der Tiertränke ist dagegen Wasser mit einem höheren Druck (Spüldruck), nämlich dem Druck in der Wasserversorgungsleitung, erforderlich.

Aus der US-A-4 794 881 ist eine Strangtränke bekannt, die über einen Tränkestrang verfügt, dem mehrere im Abstand aufeinanderfolgende Tränkestellen zugeordnet sind. Die Tränkestellen werden über den rohrförmig ausgebildeten Tränkestrang mit Wasser gespeist. Der Tränkestrang wiederum wird über einen Wasservorratsbehälter mit Wasser versorgt. Der Wasservorratsbehälter verfügt über eine Reguliereinrichtung, die den Wasserdruck der zum Wasservorratsbehälter führenden Wasserversorgungsleitung auf den niedrigeren Tränkedruck reduziert. Aus der US-A-4 794 881 geht keine Möglichkeit zum Spülen des Tränkestrangs mit höherem Spüldruck hervor.

Aus der Praxis ist es bekannt, Strangtränken nach Art der US-A-4 794 881 zu spülen, indem Wasser aus der Wasserversorgungsleitung über einen den Wasservorratsbehälter überbrückenden gesonderten Bypass direkt im Tränkestrang zugeführt wird. Dieser Bypass ist recht aufwendig.

Hiervon ausgehend liegt der Erfindung die Aufgabe zugrunde, einen Wasservorratsbehälter für eine Tiertränke und ein Verfahren zum Spülen derselben zu schaffen, wobei mit geringem Aufwand die Umstellung der Tiertränke von einer Tränke- in eine Spülstellung (und umgekehrt) möglich ist.

Erfindungsgemäß wird diese Aufgabe durch einen Wasservorratsbehälter mit den Merkmalen des Anspruchs 1 gelöst. Die Reguliereinrichtung kann erfindungsgemäß durch eine Arretiereinrichtung mit einem von der Außenseite des Gehäuses betätigbaren Stellorgan in ihrer den Wasserzulauf ständig freigebenden Stellung arretiert werden. Damit läßt sich die Reguliereinrichtung zeitweise außer Betrieb setzen, wodurch aus dem Wasservorratsbehälter Wasser mit dem Spüldruck in den Tränkestrang einleitbar ist. Auf diese Weise ist der Wasservorratsbehälter alternativ sowohl in eine Tränke- als auch in eine Spülstellung bringbar. Der beim Stand der Technik erforderliche Bypass kann so entfallen.

Vorzugsweise ist der Wasservorratsbehälter zumindest in der Spülstellung wasserdicht ausgebildet. Dadurch wird sichergestellt, daß sich im Wasservorratsbehälter ein (höherer) Spüldruck einstellen kann, ohne daß Wasser aus dem Wasservorratsbehälter austritt. Bei einer bevorzugten Ausführungsform der Erfindung wird der Wasservorratsbehälter durch ein die Reguliereinrichtung arretierendes Stellorgan in der Spülstellung abgedichtet. Gibt hingegen das Stellorgan die Reguliereinrichtung in der Betriebsstellung frei, wird der Wasservorratsbehälter be- und entlüftet, wodurch Wasser mit geringerem Tränkedruck aus dem Wasservorratsbehälter austreten kann.

Ein Verfahren zur Lösung der der Erfindung zugrundeliegenden Aufgabe weist die Maßnahmen des Anspruchs 13 auf. Durch die Arretierung der Reguliereinrichtung in einer den Wasserzulauf ständig freigebenden Stellung ist aus dem Wasservorratsbehälter Wasser mit dem Spüldruck in den Tränkestrang einleitbar. Der Tränkestrang der Tiertränke läßt sich auf diese Weise mit dem vollen Druck der Wasserversorgungsleitung spülen.

Vorteilhafte Weiterbildungen der Erfindung ergeben sich aus den Unteransprüchen und der Beschreibung.

Ein bevorzugtes Ausführungsbeispiel der Erfindung wird nachfolgend anhand der Zeichnung näher erläutert. In dieser zeigen:
- Fig. 1: eine Vorderansicht einer Tiertränke,
- Fig. 2: einen Vertikalschnitt durch einen Wasservorratsbehälter in seiner Tränkestellung,
- Fig. 3: einen weiteren Vertikalschnitt durch den Wasservorratsbehälter analog zur Fig. 2 in einer anderen Tränkestellung,
- Fig. 4: einen Vertikalschnitt durch den Wasservorratsbehälter analog zu den Fig. 2 und 3 in einer Spülstellung,
- Fig. 5: eine Draufsicht auf den Wasservorratsbehälter, und
- Fig. 6: einen Vertikalschnitt (analog zur Fig. 2) durch einen Wasservorratsbehälter nach einem zweiten Ausführungsbeispiel der Erfindung.

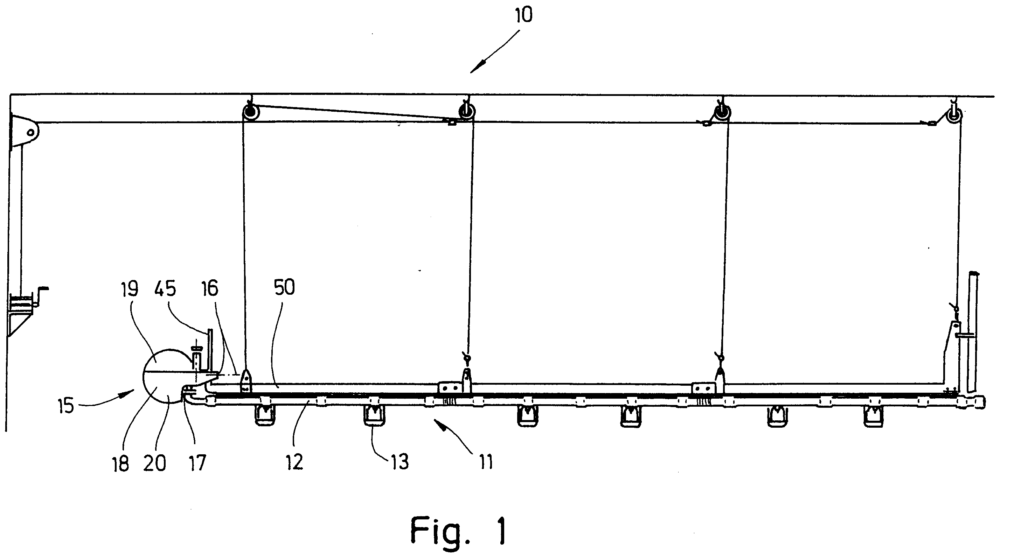

Die in der Fig. 1 dargestellte Tiertränke ist als Strangtränke 11 zur Wasserversorgung von Kleintieren, insbesondere Hühnern, ausgebildet. Die Strangtränke 11 weist einen Tränkestrang 12 auf, dem eine Vielzahl von Tränkestellen 13 zugeordnet ist. Die Tränkestellen 13 werden vom wasserführenden Tränkestrang 12 mit Wasser versorgt.

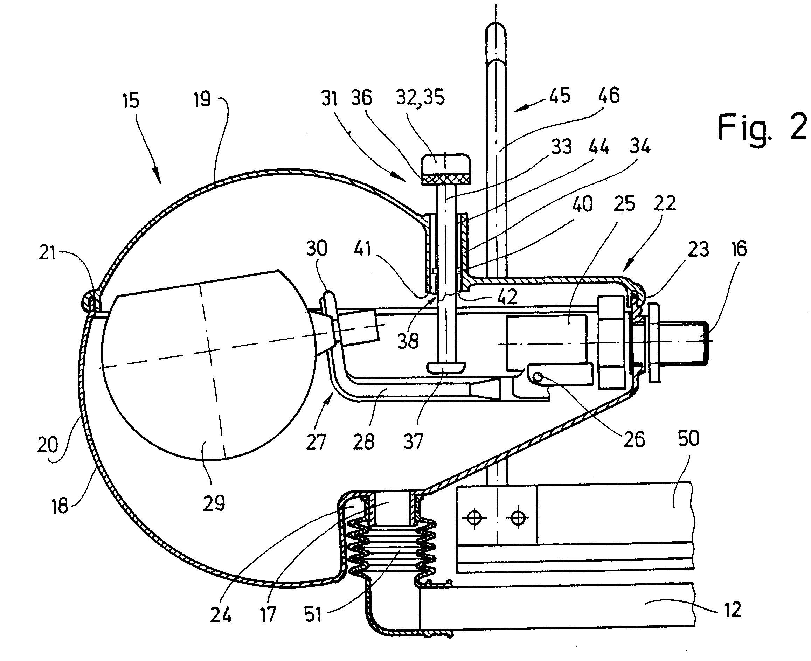

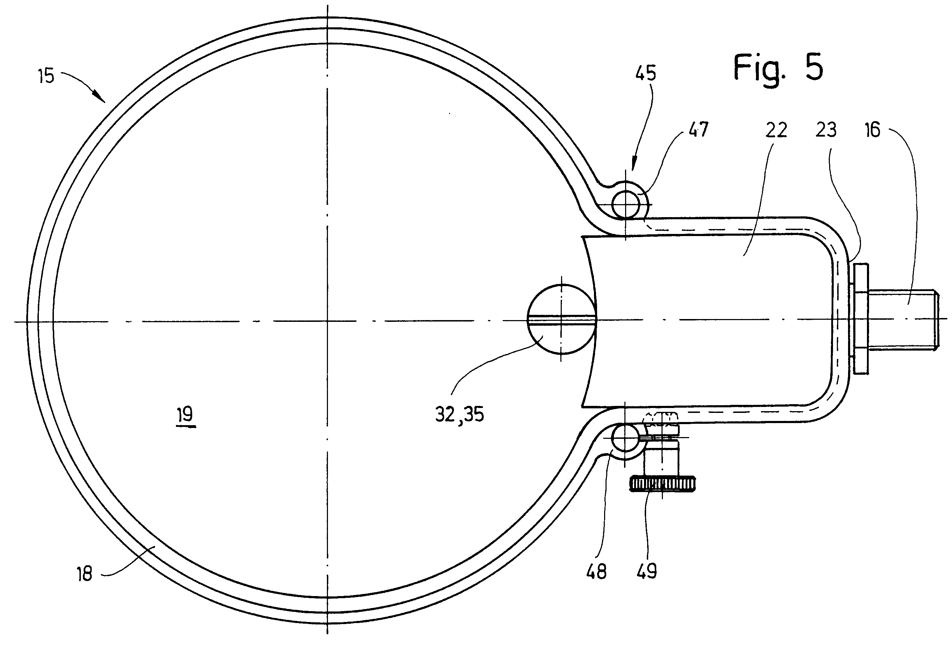

Der Tränkestrang 12 wird aus einem Wasserablauf 17 des Wasservorratsbehälters 15 (Fig. 2 bis 5) mit Wasser gespeist. Dazu ist die in der Fig. 1 angedeutete Wasserzuführleitung 14 an einen Wasserzulauf 16 des Wasservorratsbehälters 15 angeschlossen, der im wesentlichen horizontal in den Wasservorratsbehälter 15 einmündet.

Der Wasservorratsbehälter 15 weist ein im gezeigten Ausführungsbeispiel etwa kugelförmiges Gehäuse 18 auf, das sich aus zwei Hälften 19, 20 zusammensetzt. Zwischen den beiden Hälften 19, 20 ist eine Dichtungsanordnung 21 vorhanden, wodurch die Hälften 19, 20 des Gehäuses 18 wasserdicht miteinander verbunden sind. Einseitig ist das Gehäuse 18 mit einer sich im wesentlichen radialen und horizontal erstreckenden Ausbuchtung 22 versehen. An einer Stirnseite 23 der Ausbuchtung 22 befindet sich der Wasserzulauf 16. Von der Stirnseite 23 wiederum erstreckt sich die Ausbuchtung 22 einseitig in Richtung einer unterhalb derselben und seitlich versetzt dazu angeordneten Gehäuse-Ecke 24, der der Wasserablauf 17 zugeordnet ist.

Im Inneren des Gehäuses 18 ist der Wasserzulauf 16 mit einem Ventil 25 zum alternativen Öffnen und Schließen des Wasserzulaufs 16 versehen. Dem Ventil 25 ist eine um eine Schwenkachse 26 schwenkbare Reguliereinrichtung 27 zugeordnet, die das Ventil 25 - und damit den Wasserzulauf 16 - in Abhängigkeit von ihrer Relativstellung entweder öffnet oder verschließt.

Die Reguliereinrichtung 27 besteht aus einem Betätigungshebel 28 und einem an einem Ende des Betätigungshebels 28 verstellbar befestigten Schwimmkörper 29. Der Betätigungshebel 28 weist an der der Schwenkachse 26 und dem Ventil 25 abgewandten Seite einen nach oben nahezu rechtwinklig abgebogenen Haltesteg 30 auf. Hieran ist der Schwimmkörper 29 derart befestigt, daß er verschoben und in der entsprechenden Stellung arretiert werden kann zur Einstellung der Reguliereinrichtung 27 auf den gewünschten Tränkedruck.

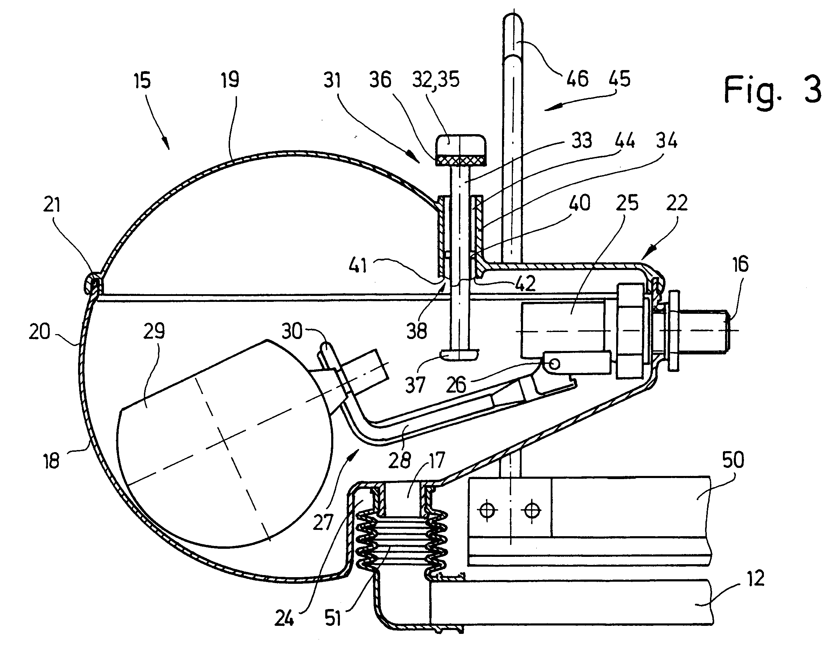

In der Fig. 2 ist der Wasservorratsbehälter 15 in einer (ersten) Tränkestellung der Strangtränke 11 dargestellt. In dieser Stellung ist Wasser mit gegenüber dem Druck in der Wasserzuführleitung 14 vermindertem Tränkedruck dem Tränkestrang 12 über den Wasserablauf 17 zuführbar. Dabei nimmt die Reguliereinrichtung 27 eine das Ventil 25 und den Wasserzulauf 16 verschließende obere Endstellung ein. Sinkt der Wasserspiegel in dem Wasservorratsbehälter 15 ab, bewegt der Schwimmkörper 29 den Betätigungshebel 28 nach unten. In der Fig. 3 ist die untere Stellung des Schwimmkörpers 29 und des Betätigungshebels 28 gezeigt. Diese entspricht einer (zweiten) Tränkestellung der Strangtränke 11, in der das Ventil 25 und somit der Wasserzulauf 16 geöffnet werden. Der Wasservorratsbehälter 15 wird dadurch mit Wasser aus der Wasserzuführleitung 14 gefüllt, bis der Schwimmkörper 29 der Reguliereinrichtung 27 wieder die in der Fig. 2 dargestellte (erste) Tränkestellung erreicht hat, in der der Betätigungshebel 28 den Wasserzulauf 16 über das Ventil 25 schließt.

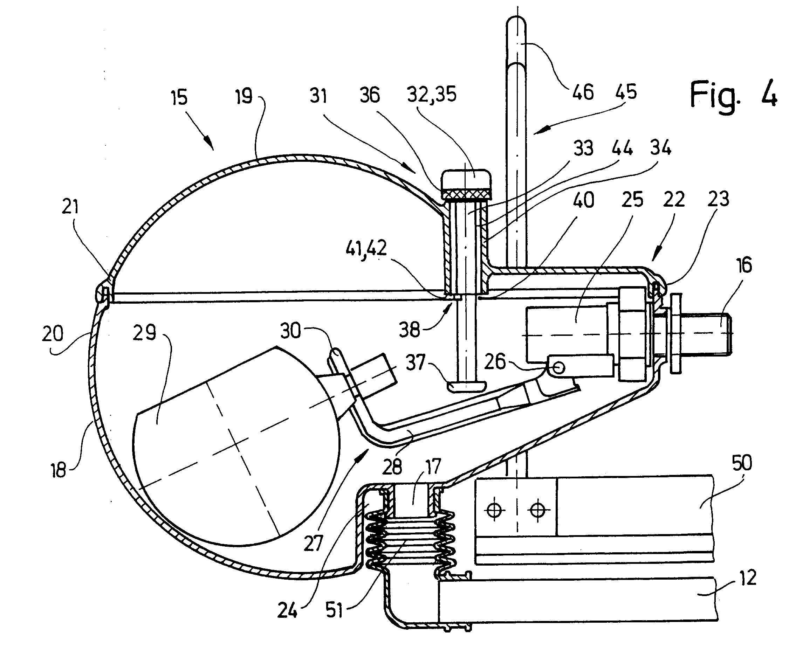

In der Fig. 4 ist der Wasservorratsbehälter 15 in einer Spülstellung der Strangtränke 11 dargestellt. In dieser ist die Reguliereinrichtung 27 in ihrer unteren Endstellung arretiert. In dieser ist das Ventil 25 stets geöffnet, so daß über den Wasserzulauf 16 ständig Wasser aus der Wasserzuführleitung 14 in den Wasservorratsbehälter 15 einfließen kann. Der bei arretierter Reguliereinrichtung 27 wasserdicht abgeschlossene Wasservorratsbehälter 15 wird dadurch vollständig mit Wasser gefüllt. Es baut sich dadurch im Wasservorratsbehälter 15 ein Druck auf, der dem Druck in der Wasserzuführleitung 14 entspricht. Mit diesem (hohen) Druck, nämlich dem Spüldruck, wird der Tränkestrang 12 in der Spülstellung mit Wasser versorgt.

Zur Arretierung der Reguliereinrichtung 27 in der Spülstellung der Strangtränke 11 dient eine Arretiereinrichtung 31. Die Arretiereinrichtung 31 ist durch ein im Gehäuse 18 in definierter Position fixierbares Stellorgan 32 gebildet. In dieser in der Fig. 4 dargestellten Position arretiert das Stellorgan 32 den Betätigungshebel 28 der Reguliereinrichtung 27 in einer unteren, das Ventil 25 ständig offen haltenden Stellung.

Das Stellorgan 32 weist einen länglichen Schaft 33 auf, mit dem es in einer korrespondierend ausgebildeten Buchse 34 des Gehäuses 18 längsverschieblich gehalten ist. Außerhalb des Gehäuses 18 verfügt das Stellorgan 32 über einen Betätigungskopf 35, der zur Bedienung des Stellorgans 32 dient. Dem Betätigungskopf 35 ist auf der dem Gehäuse 18 zugewandten Seite eine Dichtung 36 zugeordnet. Mit dieser wird das Gehäuse 18 an der Buchse 34 wasserdicht verschlossen, wenn das Stellorgan 32 in der in der Fig. 4 dargestellten Spülstellung fixiert ist. Der Schaft 33 verfügt an seinem innerhalb des Gehäuses 18 liegenden Ende über einen Fuß 37, der in der Spülstellung an der Oberseite des Betätigungshebels 28 anliegt (Fig. 4).

Zur Fixierung des Stellorgans 32 in der in der Fig. 4 dargestellten Spülstellung ist ein hier bajonettartig ausgebildeter Feststeller 38 vorgesehen. Der Feststeller 38 verfügt zum einen über zwei gegenüberliegende Vorsprünge 40 am Schaft 33 des Stellorgans 32. Zum anderen ist der Feststeller 38 mit an der unteren Stirnfläche 41 der Buchse 34 angeordneten Vorsprüngen 42 versehen. In Richtung zu den Vorsprüngen 42 kann die Stirnfläche 41 der Buchse 34 rampenartig ausgebildet sein. Durch ein Herunterdrücken und anschließendes Verdrehen des Stellorgans 32 gelangen die Vorsprünge 40 im Schaft 33 des Stellorgans 32 zur Anlage an der Stirnfläche 41 und den Vorsprüngen 42 der Buchse 34 des Gehäuses 18. Dadurch ist die Arretiereinrichtung 31 in der Spülstellung der Strangtränke 11 gesichert. Gleichzeitig wird durch eine entsprechende Anordnung der Vorsprünge 40 am Schaft 33 die Dichtung 36 des Stellorgans 32 fest zwischen dem Betätigungskopf 35 und der Buchse 34 eingespannt zur sicheren Abdichtung des Gehäuses 18.

In der Tränkestellung der Strangtränke 11 ist der Feststeiler 38 des Stellorgans 32 gelöst. Der Betätigungskopf 35 mit der Dichtung 36 ist dabei von der Buchse 34 des Gehäuses 18 abgehoben, also die Dichtung 36 nicht wirksam. Die Vorsprünge 40 am Schaft 33 finden in dieser Stellung des Stellorgans 32 Aufnahme in gegenüberliegenden durchgehenden Nuten 44 in der Buchse 34. Gleichzeitig dienen die durchgehenden Nuten 44 zur Entlüftung des Gehäuses 18 in der Tränkestellung. Zur wirksamen Entlüftung können der Buchse 34 zusätzliche Nuten zugeordnet sein.

Der Wasservorratsbehälter 15 ist relativ zur Strangtränke 11 höhenverstellbar. Der Wasserpegel im Wasservorratsbehälter 15 kann dadurch in der Höhe zum Tränkestrang 12 verändert werden zur Einstellung des gewünschten Tränkedrucks. Zu diesem Zweck ist der Wasservorratsbehälter 15 an einer Halterung 45 befestigt, die mit einem Trägerprofil 50 zum Halten des Tränkestrangs 12 verbunden ist (Fig. 1). Die Halterung 45 verfügt über zwei parallele Führungen 46, die sich durch zwei korrespondierende Führungsbuchsen 47 und 48 am Gehäuse 18 erstrecken. Die Führungsbuchse 48 ist geschlitzt und dadurch mittels einer Rändelschraube 49 im Durchmesser veränderbar zum Festklemmen des Gehäuses 18 an der entsprechenden Führung 46 der Halterung 45.

Der Wasserablauf 17 des Wasservorratsbehälters 15 ist über einen Faltenbalg 51 an den Tränkestrang 12 angeschlossen. Der Faltenbalg 51 ist längenveränderlich zur Überbrückung der sich bei der Höhenverstellung des Wasservorratsbehälters 15 einstellenden Abstandsänderung des Wasserablaufs 17 gegenüber dem Tränkestrang 12.

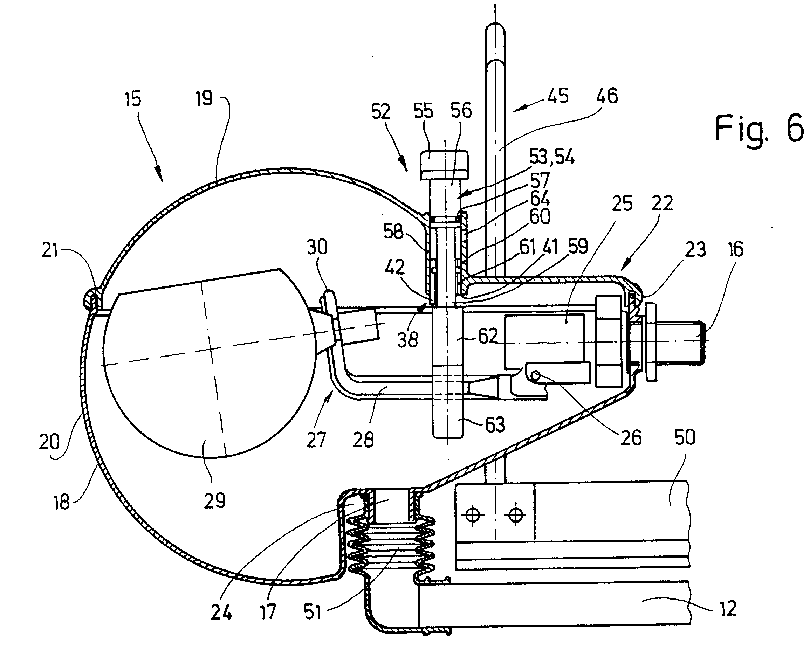

Die Fig. 6 zeigt ein zweites Ausführungsbeispiel des Wasservorratsbehälters 15. Dieser unterscheidet sich von dem in Fig. 1 bis 5 dargestellten Wasservorratsbehälter 15 durch die Arretiereinrichtung 52. Im übrigen entspricht der Wasservorratsbehälter 15 dieses zweiten Ausführungsbeispiels dem ersten Ausführungsbeispiel, wobei für gleiche oder gleichwirkende Teile gleiche Bezugsziffern verwendet werden.

Die Arretiereinrichtung 52 verfügt über ein Stellorgan 53 mit einem mehrstufigen Schaft 54. Ein vom Betätigungskopf 55 des Stellorgans 53 ausgehendes Oberteil des Schafts 54 ist als Dichtabschnitt 56 ausgebildet, auf dem ein Dichtring 57 angeordnet ist. Der Dichtabschnitt 56 ist korrespondierend zum Innendurchmesser einer Buchse 58 in der oberen Hälfte 19 des Gehäuses 18 ausgebildet. Über den Dichtring 57 ist das Stellorgan 53 gegenüber der Buchse 58 abgedichtet. Unterhalb des Dichtabschnitts 56 verfügt der Schaft 54 über einen Mittenabschnitt 59, der im Durchmesser gegenüber dem Innendurchmesser der Buchse 58 verringert ist. Der Mittenabschnitt 59 ist mit gegenüberliegenden Vorsprüngen 60 versehen, die in durchgehenden Nuten 61 im unteren Endbereich der Buchse 58 geführt sind.

Mit dem unteren Ende des Mittenabschnitts 59 ist verbunden ein U-förmiger Bügel 62. Der U-Bügel 62 verfügt über zwei nach unten weisende, parallele Schenkel 63, die gegenüberliegenden Seiten des Betätigungshebels 28 der Reguliereinrichtung 27 zugeordnet sind, und zwar derart, daß sie die freie Auf- und Abbewegung der Reguliereinrichtung 27 bei der in der Fig. 6 dargestellten Stellung des Stellorgans 53, nämlich der Tränkestelle, nicht beeinflussen. Zwischen den Schenkeln 63 des Stellorgans 53 wird der Betätigungshebel 28 gegen seitliches Auswanden geführt.

Das Stellorgan 53 ist in der Buchse 58 auf- und abbewegbar. In der in der Fig. 6 dargestellten, der Tränkestelle entsprechenden oberen Position des Stellorgans 53 ist das Innere des Wasservorratsbehälters 15 belüftet durch eine seitliche Bohrung 64 in der Buchse 58. Die seitliche Bohrung 64 ist derart im oberen Bereich der Buchse 58 zugeordnet, daß in der Spülstellung des Wasservorratsbehälters, in der das Stellorgan 53 heruntergedrückt ist, sich der Dichtring 57 auf dem Dichtabschnitt 56 des Stellorgans 53 unterhalb der seitlichen Bohrung 64 befindet und dadurch das Innere des Wasservorratsbehälters 15 abdichtet. Arretiert wird das Stellorgan 53 in der Spülstellung bajonettartig, indem ähnlich wie beim zuerst beschriebenen Ausführungsbeispiel die Vorsprünge 52 am Mittenabschnitt 59 des Schafts 54 unterhalb der Stirnfläche 41 der Buchse 58 zur Anlage kommen. Gleichzeitig wird durch den U-förmigen Bügel 62 am unteren Ende des Schafts 54 der Betätigungshebel 28 der Reguliereinrichtung 27 heruntergedrückt und gehalten in einer Stellung, die der Fig. 4 des zuvor beschriebenen Ausführungsbeispiels entspricht.

## Patentansprüche

1. Wasservorratsbehälter für eine Tiertränke, mit einem Gehäuse (18) und einer darin angeordneten Reguliereinrichtung (27) zum alternativen Öffnen und Schließen **dadurch gekennzeichnet,** daß der Reguliereinrichtung (27) eine Arretiereinrichtung (31) mit einem von der Außenseite des Gehäuses (18) betätigbaren Stellorgan (32) zugeordnet ist zur bedarfsweisen Arretierung der Reguliereinrichtung (27) in einer den Wasserzulauf (16) freigebenden Stellung.

2. Wasservorratsbehälter nach Anspruch 1, dadurch gekennzeichnet, daß das Stellorgan (32) in einer definierten Position gegenüber dem Gehäuse (18) fixierbar ist.

3. Wasservorratsbehälter nach Anspruch 1 oder 2, dadurch gekennzeichnet, daß das Gehäuse (18) mindestens in der die Regeluliereinrichtung (27) arretierenden Position des Stellorgans (32, 53) dicht ausgebildet ist.

4. Wasservorratsbehälter nach einem oder mehreren der Ansprüche 1 bis 3, dadurch gekennzeichnet, das das Stellorgan (32, 53) einen länglichen Schaft (33, 54) aufweist, der axialverschieblich in einer korrespondierenden Buchse (34, 58) im Gehäuse (18) gelagert ist.

5. Wasservorratsbehälter nach einem oder mehreren der Ansprüche 1 bis 4, dadurch gekennzeichnet, daß in einer die Arretiereinrichtung (31, 52) blockierenden Stellung das Gehäuse (18) durch das Stellorgan (32, 53) abdichtbar ist.

6. Wasservorratsbewhälter nach einem oder mehreren der Ansprüche 1 bis 5, dadurch gekennzeichnet, daß in einer die Arretiereinrichtung (31, 52) freigebenden Stellung das Stellorgan (32, 53) als eine Entlüftung des Gehäuses (18) ausgebildet ist.

7. Wasservorratsbehälter nach einem oder mehreren der Ansprüche 1 bis 6, dadurch gekennzeichnet, das das Stellorgan (32, 53) einen außerhalb des Gehäuses (18) sich befindenden Betätigungskopf (35, 55) aufweist, dem eine Dichtung (36, 57) zugeordnet ist, die vorzugsweise in der die Arretiereinrichtung (31, 52) blockierenden Stellung des Stellorgans (32, 53) abdichtend zwischen dem Betätigungskopf (35, 55) und dem Gehäuse (189 angeordnet ist.

8. Wasservorratsbehälter nach einem oder mehreren der Ansprüche 1 bis 7, gekennzeichnet durch Feststeller (38) zum Fixieren des Stellorgans (32, 53) in seiner die Arreitiereinrichtung (31, 52) blockierenden Stellung.

9. Wasservorratsbehälter nach einem oder mehreren der Ansprüche 1 bs 8, dadurch gekennzeichnet, daß der Feststeller (38) durch mindestens einen quer zum Schaft (33, 54) des Stellorgans (32, 53) verlaufenden Vorsprung (40, 60) und eine (untere) Stirnfläche (41) der Buchse (34, 58) zur Führung des Stellorgans (32, 53)gebildet ist.

10. Wasservorratsbehälter nach einem oder mehreren der Ansprüche 1 bis 9, dadurch gekennzeichnet, daß der Stirnfläche (41) mindestens ein Vorsprung (42) oder eine Vertiefung zugeordnet ist, derart, daß der Vorsprung (42) infolge einer Drehbewegung des Stellorgans (32, 53) bajonettverschlußartig zu der Stirnfläche (41) fixierbar ist.

11. Wasservorratsbehälter nach einem oder mehreren der Ansprüche 1 bis 10, dadurch gekennzeichnet, daß die Buchse (34, 58) eine mit meindestens einem Teil des Schafts (33, 54) korrespondierende Durchgangsbohrung aufweist, der zur Aufnahme des Vorsprungs (40, 60) des Schafts (33, 54) während der Axialverschiebung des Stellorgans (32, 53) mindestens eine Nut (44, 61) zugeordnet ist.

12. Wasservorratsbehälter nach einem oder mehreren der Ansprüche 1 bis 11, dadurch gekennzeichnet, daß das Gehäuse (18) gegenüber einem mehrere Tränkestellen (13) aufweisende Tränkestrang (12) höhenverstellbar ist, vorzugsweise derart, daß das Gehäuse (18) über eine im wesentlichen vertikal angeordnete Halterung (45( an einem Trägerprofil (12) gelagert und auf diesem sowohl verschiebbar als auch arretierbar ist.

13. Verfahren zum Spülen einer Tiertränke, die einen Tränkestrang (12) mit mehreren Tränkestellen (13), einen Wasservorratsbehälter (15) mit einem Wasserzulauf (16) sowie einen mit dem Tränkestrang (12) verbundenen Wasserablauf (11) und eine im Wasservorratsbehälter (15) angeordnete Reguliereinrichtung (27) aufweist, wobei durch die Reguliereinrichtung (27) der Wasserzulauf (16) abwechselnd geöffnet oder geschlossen wird, dadurch gekennzeichnet, daß die Regulier(27) zum Spülen des Tränkestrangs (12) in einer den Wasszulauf (16) ständig freigebenden Spülstellung arretiert wird.

## Claims

1. Water storage tank for an animal watering trough, having a housing (18) and a regulating device (27) arranged therein for the alternative opening and closing, characterized in that the regulating device (27) is assigned a retaining device (31) having an actuator (32) which can be actuated from the outside of the housing (18) for retaining the regulating device (27), when required, in a position which releases the water inflow (16).

2. Water storage tank according to Claim 1, characterized in that the actuator (32) can be fixed in a defined position relative to the housing (18).

3. Water storage tank according to Claim 1 or 2, characterized in that the housing (18) is of sealed construction, at least in the position of the actuator (32, 53) which retains the regulating device (27).

4. Water storage tank according to one or more of Claims 1 to 3, characterized in that the actuator (32, 53) has an elongate shaft (33, 54) which is mounted in the housing (18) so as to be axially displaceable in a corresponding bush (34, 58).

5. Water storage tank according to one or more of Claims 1 to 4, characterized in that the housing (18) can be sealed off by the actuator (32, 53) in a position which blocks the retaining device (31, 52).

6. Water storage tank according to one or more of Claims 1 to 5, characterized in that the actuator (32, 53) is constructed as a venting device of the housing (18) in a position which releases the retaining device (31, 52).

7. Water storage tank according to one or more of Claims 1 to 6, characterized in that the actuator (32, 53) has an actuating head (35, 55) which is located outside the housing (18) and is assigned a seal (36, 57) which is preferably arranged in a sealing manner between the actuating head (35, 55) and the housing (18) in the position of the actuator (32, 53) which blocks the retaining device (31, 52).

8. Water storage tank according to one or more of Claims 1 to 7, characterized by a fixing device (38) for fixing the actuator (32, 53) in its position blocking the retaining device (31, 32).

9. Water storage tank according to one or more of Claims 1 to 8, characterized in that the fixing device (38) is formed by at least one projection (40, 60), running transversely to the shaft (33, 54) of the actuator (32, 53), and by a (lower) end face (41) of the bush (34, 58) for guiding the actuator (32, 53).

10. Water storage tank according to one or more of Claims 1 to 9, characterized in that the end face (41) is assigned at least one projection (42) or one depression in such a way that the projection (42) can be fixed in the manner of a bayonet closure relative to the end face (41) as a result of a rotary movement of the actuator (32, 53).

11. Water storage tank according to one or more of Claims 1 to 10, characterized in that the bush (34, 58) has a through-bore which corresponds to at least one part of the shaft (33, 54) and is assigned at least one groove (44, 61) for receiving the projection (40, 60) of the shaft (33, 54) during the axial displacement of the actuator (32, 53).

12. Water storage tank according to one or more of Claims 1 to 11, characterized in that the housing (18) is vertically adjustable relative to a watering line (12) which has a plurality of watering places (13), preferably in such a way that the housing (18) is mounted on a support profile (50) via a holder (45) arranged substantially vertically and can be both displaced and retained on said support profile.

13. Method for rinsing an animal watering trough which has a watering line (12) with a plurality of watering places (13), a water storage tank (15) with a water inflow (15) and a water outflow (17) which is connected to the watering line (12) and a regulating device (27) which is arranged in the water storage tank (15), the water inflow (16) being alternately opened or closed by means of the regulating device (27), characterized in that the regulating device (27) for rinsing the watering line (12) is locked in a rinsing position which continuously releases the water inflow (16).

## Revendications

1. Réservoir d'eau pour un abreuvoir, comprenant un boîtier (18) et un dispositif de réglage (27) agencé à l'intérieur pour l'ouverture et la fermeture alternatives, caractérisé en ce qu'au dispositif de réglage (27) est adjoint un dispositif d'arrêt (31) comportant un organe ajustable (32) qui peut être actionné depuis le côté extérieur du boîtier (18) pour arrêter en cas de besoin le dispositif de réglage (27) dans une position libérant l'arrivée d'eau (16).

2. Réservoir d'eau suivant la revendication 1, caractérisé en ce que l'organe ajustable (32) peut être fixé dans une position définie par rapport au boîtier (18).

3. Réservoir d'eau suivant l'une des revendications 1 et 2, caractérisé en ce que le boîtier (18) est réalisé de manière étanche au moins dans la position de l'organe ajustable (32, 53) qui arrête le dispositif de réglage (27).

4. Réservoir d'eau suivant une ou plusieurs des revendications 1 à 3, caractérisé en ce que l'organe ajustable (32, 53) présente une tige allongée (33, 54) qui est supportée de manière à pouvoir coulisser axialement dans une douille (34, 58) correspondante du boîtier (18).

5. Réservoir d'eau suivant une ou plusieurs des revendications 1 à 4, caractérisé en ce que le boîtier (18) peut être étanchéifié par l'organe ajustable (32, 53) dans une position bloquant le dispositif d'arrêt (31, 52).

6. Réservoir d'eau suivant une ou plusieurs des revendications 1 à 5, caractérisé en ce que, dans une position libérant le dispositif d'arrêt (31, 52), l'organe ajustable (32, 53) est réalisé sous la forme d'une ventilation du boîtier (18).

7. Réservoir d'eau suivant une ou plusieurs des revendications 1 à 6, caractérisé en ce que l'organe ajustable (32, 53) présente une tête d'actionnement (35, 55) qui se trouve en dehors du boîtier (18) et à laquelle est adjoint un organe d'étanchéité (36, 57) qui est de préférence agencé, dans la position de l'organe ajustable (32, 53) qui bloque le dispositif d'arrêt (31, 52), de manière à étanchéifier entre la tête d'actionnement (35, 55) et le boîtier (18).

8. Réservoir d'eau suivant une ou plusieurs des revendications 1 à 7, caractérisé par un arrêt (38) pour la fixation de l'organe ajustable (32, 53) dans sa position bloquant le dispositif d'arrêt (31, 52).

9. Réservoir d'eau suivant une ou plusieurs des revendications 1 à 8, caractérisé en ce que l'arrêt (38) est formé par au moins une saillie (40, 60) qui s'étend transversalement à la tige (33, 54) de l'organe ajustable (32, 53) et une surface frontale (inférieure) (41) de la douille (34, 58) destinée au guidage de l'organe ajustable (32, 53).

10. Réservoir d'eau suivant une ou plusieurs des revendications 1 à 9, caractérisé en ce qu'à la surface frontale (41) est adjoint au moins une saillie (42) ou un évidement de telle façon que la saillie (42) puisse être fixée à la surface frontale (41) à la manière d'une fermeture à baïonnette à la suite d'un mouvement de rotation de l'organe ajustable (32, 53).

11. Réservoir d'eau suivant une ou plusieurs des revendications 1 à 10, caractérisé en ce que la douille (34, 58) présente un trou de passage qui correspond à au moins une partie de la tige (33, 54) et auquel est adjointe au moins une rainure (44, 61) pour la réception de la saillie (40, 60) de la tige (33, 54) pendant le déplacement axial de l'organe ajustable (32, 53).

12. Réservoir d'eau suivant une ou plusieurs des revendications 1 à 11, caractérisé en ce que le boîtier (18) est ajustable en hauteur par rapport à une ligne d'abreuvoirs (12) présentant plusieurs emplacements d'abreuvoir (13), de préférence de telle façon que le boîtier (18) soit supporté sur un profilé de support (12) par l'intermédiaire d'une fixation (45) agencée sensiblement verticalement et qu'il puisse non seulement être amené à coulisser mais aussi être arrêté sur ce profilé.

13. Procédé de rinçage d'un abreuvoir, qui présente une ligne d'abreuvoirs (12) avec plusieurs emplacements d'abreuvoir (13), un réservoir d'eau (15) avec une amenée d'eau (16) ainsi qu'une sortie d'eau (17) en communication avec la ligne d'abreuvoirs (12), et un dispositif de réglage (27) agencé dans le réservoir d'eau (15), l'amenée d'eau (16) étant alternativement ouverte ou fermée par le dispositif de réglage (27), caractérisé en ce que le dispositif de réglage (27) est, pour le rinçage de la ligne d'abreuvoirs (12), arrêté dans une position de rinçage libérant de manière continue l'amenée d'eau (16).
